# EUROPÄISCHE PATENTSCHRIFT

(11) **EP 0 816 180 B1**
(45) Veröffentlichungstag und Bekanntmachung des Hinweises auf die Patenterteilung: **05.06.2002**
(21) Anmeldenummer: 97110579.6
(22) Anmeldetag: 27.06.1997
(51) Int. Cl.: B60R 21/16

(54) **Airbagvorrichtung für ein Kraftfahrzeug**
Airbag for vehicle
Coussin de sécurité gonflable pour véhicule

(30) Priorität: 05.07.1996 DE 19627181
(43) Veröffentlichungstag der Anmeldung: 07.01.1998
(73) Patentinhaber: HS Technik und Design Technische Entwicklungen GmbH, 82234 Wessling (DE)
(72) Erfinder: Specht, Martin, Dipl.-Ing. (FH), 82340 Feldafing (DE)
(74) Vertreter: Nöth, Heinz, Dipl.-Phys.

(56) Entgegenhaltungen:
- DE-A- 2 330 745
- DE-A- 2 542 764
- DE-A- 3 618 060
- JP-Y- 54 003 485
- US-A- 5 186 488
- US-A- 5 503 428

## Beschreibung

Die Erfindung betrifft eine Airbagvorrichtung nach dem Oberbegriff des Patentanspruches 1.

Eine derartige Vorrichtung ist aus der EP 0 694 444 A2 bekannt. Diese bekannte Vorrichtung besitzt mindestens ein mit Gas füllbares Gaskissen, welches entlang einem Seitenfensterrahmenteil, insbesondere mittels eines Keders, mit dem auch der Dichtungsgummi für das Fahrzeugfenster am Rahmenteil befestigt wird, sowohl im gefalteten als auch im gefüllten Zustand am Fahrzeug gehalten wird. Zum Füllen des Gaskissens ist ein wenigstens eine Ausblasöffnung aufweisendes Füllrohr vorgesehen, das sich durch das Gaskissen im wesentlichen in seiner gesamten Längsrichtung erstreckt. Gegenüber dem Fahrzeuginnenraum ist das gefaltete Gaskissen mitteils einer Kissenumhüllung abgedeckt, wobei diese Abdeckung beim Füllen des Gaskissens in den Fahrzeuginnenraum hin geöffnet wird, so daß sich das Gaskissen beim Füllen zur Erzielung eines Seitenaufprallschutzes, insbesondere im Kopfbereich des Fahrzeuginsassen, sich entfalten kann.

Aufgabe der Erfindung ist es, eine Airbagvorrichtung der eingangs genannten Art zu schaffen, bei welcher die erforderliche kurze Aufblaszeit über die gesamte Länge des Gaskissens hin erreicht wird, sowie eine Verbesserung der radialen Gasabströmung aus dem Rohr in das Airbaginnere.

Diese Aufgabe wird erfindungsgemäß durch die kennzeichnenden Merkmale des Patentanspruches 1 gelöst.

Die Kissenumhüllung wird bis zum Aufbau eines bestimmten Fülldrukkes (Berstdruckes) über im wesentlichen die gesamte Längsausdehnung des Gaskissens bzw. des Füllrohres hin geschlossen gehalten. Erst dann, wenn der auf die Kissenumhüllung von innen her durch das noch gefaltete Gaskissen ausgeübte Druck den Berstdruck der Kissenumhüllung überschreitet, wird im wesentlichen über die gesamte Länge des Gaskissens entlang einer in der Kissenumhüllung vorgegebenen, insbesondere linienförmigen Sollbruchstrecke, die Kissenumhüllung nahezu zum gleichen Zeitpunkt geöffnet. Durch den nach der Initiierung des Füllvorganges sich im Füllrohr aufbauenden Druck wird über den gefalteten Airbag eine gleichmäßige Vorspannung von innen her auf die Kissenumhüllung ausgeübt, bis der Berstdruck erreicht wird. Von der Initiierung des Füllvorganges, beispielsweise durch Zündung eines Gasgenerators, bis zum Erreichen des Berstdruckes benötigt man etwa 3 ms und zum vollständigen Öffnen der Sollbruchstelle etwa 2 ms. Bei Überschreiten des Berstdruckes öffnet sich die Kissenumhüllung auf der gesamten Länge der in das Umhüllungsmaterial eingebrachten Sollbruchlinie, so daß schlagartig zum gleichen Zeitpunkt über die gesamte Länge des Gaskissens hin die Kissenumhüllung für die Entfaltung des Gaskissens beim Füllen mit dem Füllgas geöffnet ist. Auf diese Weise wird die erforderliche kurze Aufblaszeit von 20 ms und geringer mit absoluter Sicherheit entlang der relativ langen Wegstrecke der Aufblasgase erreicht. Diese Wegstrecke bzw. die Länge des aufzufüllenden Gaskissens kann bis zu zwei Meter betragen, insbesondere wenn es sich um einen Airbag handelt, der sich von der A-Säule bis zur C-Säule bzw. D-Säule des Fahrzeugs erstreckt, oder wenn mit Hilfe eines sich von der A-Säule bis zur C-Säule erstreckenden Füllrohres zwei Gaskissen (Airbag) - Bereiche oder mehr am vorderen und hinteren Seitenfenster gefüllt werden müssen. Hierbei können auch zwei oder mehr separat angeordnete Gaskissen vorgesehen sein.

Der Hohlraum des Füllrohrs im gefalteten Gaskissenpaket bildet einen vorbereiteten Freiraum, der sich im wesentlichen über die gesamte Länge der Gaskissenanordnung, welche den Seitenaufaprallschutz für den Kopfbereich bildet, erstreckt. Der Kopfschutzairbag kann sich dabei von der A-Säule bis zur B-Säule oder von der A-Säule bis zur C-Säule oder auch zur D-Säule des Fahrzeugs erstrecken. Die Airbaganordnung kann, wie schon erläutert, auch aus zwei Gaskissen gebildet werden, die im Bereich des vorderen seitlichen Fensters und im Bereich des hinteren seitlichen Fensters angeordnet sind.

Die Befestigung, insbesondere am oberen Fensterrahmenteil, erfolgt bevorzugt mit Hilfe eines Keders, der auf den Rahmenfalz der Karosserie aufgeklemmt wird, wobei dieser Keder auch zur Befestigung der umlaufenden Gummidichtung, an welcher das geschlossene Fenster oder der Türrahmen anliegt, dienen kann.

Die kurzzeitige, durch die Vorspannung vorbereitete Öffnung der Kissenumhüllung über die gesamte Airbaglänge (bis zu zwei Meter) hin ermöglicht ein rasches Aufblasen des Gaskissens in einem frühzeitigen Seitenverformungsstadium des Karosserieaufbaus. Bei der Erfindung ist das Füllrohr mit bevorzugt schlitzförmigen Ausblasöffnungen ausgestattet. Hierdurch wird gewährleistet, daß nach dem Bersten der Sollbruchlinie in der Kissenumhüllung die Gasfront im Füllrohr sich gezielt in das Gaskissen (Airbagkissen) ausbreiten kann. Bei einem sich von der A-Säule bis zur C-Säule erstreckenden Gaskissen (AC-Bag) wird die Führung des sich expandierenden Gases im Füllrohr in zwei Entspannungszonen aufgeteilt. Hierdurch wird gewährleistet, daß der vordere und hintere Seitenbereich durch zugeordnete vordere und hintere Kissenbereiche, welche von einem Ende des Füllrohres her, insbesondere vom vorderen Ende her, innerhalb der kurzen erforderlichen Aufblaszeit aufgeblasen worden sind. In bevorzugter Weise wird der Gasgenerator, welcher zum Füllen der Gaskissenanordnung dient, in der Instrumententafel im vorderen Teil des Kraftfahrzeuges angeordnet. Es ist jedoch auch möglich, den Gasgenerator im Bereich der B-Säule anzuordnen und von der Mitte her über ein nach hinten und nach vorne sich erstreckendes Füllrohr das vordere und hintere Gaskissen gleichzeitig zu füllen.

Insbesondere, wenn der Gasgenerator als untoxischer chemischer Feststoffgenerator ausgebildet ist, wird die Anordnung des Gasgenerators im B-Säulenbereich bevorzugt.

Das Füllrohr (Gaslanze) kann aus einem Stahl- oder Aluminiumrohr bestehen, welches dreidimensional zur Anpassung an die Fahrzeugkontur am seitlichen Dachkantenbereich, welcher den oberen Fensterrahmen bildet, oder innerhalb der oberen Dachlinie vorgeformt ist. In bevorzugter Weise ist das Füllrohr von der A-Säule nahe der Dachlinie über die B-Säule bis zur C-Säule des Fahrzeugs geführt. Das Füllrohr kann dabei eine zusätzliche Stützfunktion für das Gaskissen, welches das Füllrohr umfaßt, bilden. In bevorzugter Weise besitzt das Füllrohr wenigstens drei Verankerungspunkte an der Fahrzeugkarosserie. Diese Punkte liegen bevorzugt im Bereich der A-Säule, der B-Säule und der C-Säule. Die schlitzförmigen Gasaustrittsöffnungen im Füllrohr sind mit ihrer Schlitzlänge und Schlitzbreite an die in Abhängigkeit von den Fahrzeugabmessungen gewählten Gaskissengrößen angepaßt, so daß ein frühzeitiges Aufblasen des Gaskis-sens nach dem Bersten der Kissenumhüllung gewährleistet wird. Bei der Erfindung werden Schlitzbreite innerhalb der Längsausdehnung der jeweiligen Gasausblasöffnung variiert, so daß ein schmaler Schlitzbereich und ein breiter Schlitzbereich, beispielsweise innerhalb einer Ausströmzone, vorhanden sind. Hierdurch kann gewährleistet werden, daß der Bereich des Gaskissens, welcher in der Nähe der B-Säule liegt, frühzeitiger aufgeblasen wird als der weiter vorne liegende Gaskissenbereich bei den beiden Vordersitzen des Fahrzeugs.

Der Innendurchmesser des Füllrohres wird in Abhängigkeit vom Füllvolumen gewählt. Bei einem Füllvolumen des Gaskissens von etwa 18 Liter beträgt die Querschnittsfläche des Rohrinnenquerschnittes etwa 75 bis 120 mm². Bei einem kreisförmigen Querschnitt beträgt der Innendurchmesser bevorzugt 11 mm. Bei einem Füllvolumen von 30 Liter beträgt die innere Querschnittsfläche des Füllrohres bevorzugt etwa 140 bis 220 mm². Bei einem kreisförmigen Innenquerschnitt beträgt der Innendurchmesser des Füllrohres dann bevorzugt 15 mm. Die Wandstärke des Füllrohres (Gaslanze) beträgt bei einem Stahlrohr bevorzugt etwa 0,5 mm. Wenn das Füllrohr als Aluminium gefertigt ist, beträgt die Wandstärke bevorzugt 1 mm. Zur Erfüllung der Richtlinie FMVSS 201 kann das Füllrohr eine Aufprallabsorptionswirkung für den seitlichen Aufprallschutz im Kopfbereich des Fahrzeuginsassen haben. Hierzu kann das Füllrohr aus einem beim Kopfaufprall deformierbaren Material bestehen. Die Deformierbarkeit des Materials kann durch eine in Längsrichtung des Rohres verlaufende gewählte Struktur (Ziehharmonikastruktur) in bestimmten Abschnitten des Rohrumfanges erreicht werden. Der Rohrquerschnitt kann beliebig ausgebildet sein und an die jeweiligen Gegebenheiten am Fahrzeug angepaßt sein. Es kann ein kreisrunder, vieleckiger, rechteckiger oder elliptischer Rohrquerschnitt gewählt werden.

In bevorzugter Weise besteht das Rohrmaterial aus einem extrudierbaren Werkstoff, beispielsweise Aluminium oder Kunststoff. Das Füllrohr kann mit dem Material der Kissenumhüllung verankert sein. Hierzu können an das Rohrprofil, beispielsweise hakenförmige Verankerungsstreifen, an das Rohräußere angeformt sein. Auch die bevorzugt aus einem gummielastischen Kunststoff bestehende Kissenumhüllung kann durch Spritzgießen hergestellt sein, wobei eine Sollreißlinie (Splittnaht), durch die der Berstdruck festgelegt ist, beim Spritzgießen in das Umhüllungsmaterial prozeßsicher eingebracht wird. Sowohl das Füllrohr als auch die Kissenumhüllung können durch eine Zweikomponentenabspritzung als Kunststoffextruderprofile hergestellt sein, wobei für das Füllrohr eine härtere Komponente verwendet wird als für die Kissenumhüllung. Nach der Montage des Gaskissens am Füllrohr in der Weise, daß die Gaskissenfaltungen den Gasaustrittsöffnungen im Füllrohr gegenüberliegen, wird die Kissenumhüllung um das gefaltete Gaskissen gelegt und fixiert.

Anhand der Figuren wird an Ausführungsbeispielen die Erfindung noch näher erläutert. Es zeigt:
- Fig. 1:: in Seitenansicht eine Airbagvorrichtung, welche ein Ausführungsbeispiel der Erfindung ist;
- Fig. 2:: einen Füllrohrquerschnitt entlang einer Schnittlinie A-A in Fig. 1;
- Fig. 3:: einen Füllrohrquerschnitt entlang einer Schnittlinie B-A in Fig. 1;
- Fig. 4:: einen Fühhrohrabschnitt mit einer schlitzförmigen Ausblasöffnung;
- Fig. 5:: einen Füllrohrabschnitt am Rohrende;
- Fig. 6:: eine schnittbildliche Darstellung durch ein Ausführungsbeispiel der Erfindung; und
- Fig. 7:: eine Gasgeneratoranordnung im Bereich der B-Säule des Fahrzeugs.

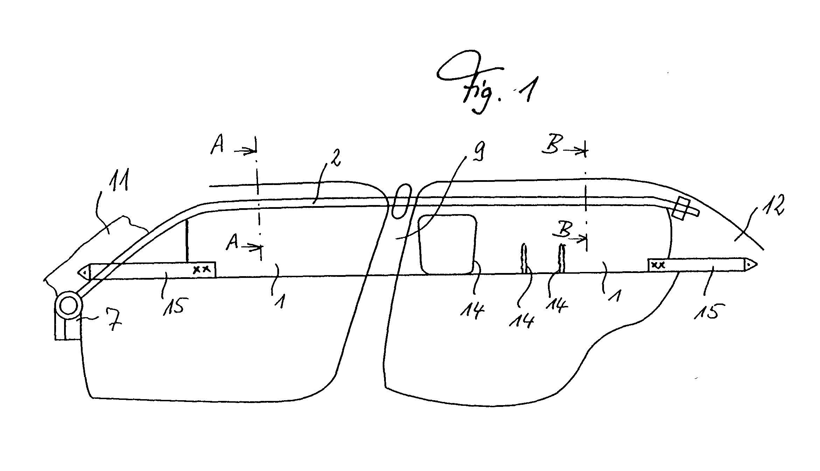

Die in den Figuren dargestellte Airbagvorrichtung für ein Kraftfahrzeug besitzt zwei mit Gas füllbare Gaskissen 1 (Airbags), die einen Seitenaufprallschutz insbesondere im Kopfbereich bei den Vordersitzen und den Rücksitzen des Kraftfahrzeugs bilden. Die beiden Gaskissenbereiche 1 werden von einem Füllrohr 2 durchsetzt. Anstelle des dargestellten duchgehenden Gaskissens können auch zwei separate Gaskissen vorgesehen sein. Das Füllrohr 2 dient zum gemeinsamen Aufblasen der Gaskissen 1. In der Fig. 6 ist in schnittbildlicher Darstellung ein Gaskissen in gefalteter Anordnung gezeigt. Das gefaltete Gaskissen 1 befindet sich in einer Kissenumhüllung 3. Die Kissenumhüllung 3 ummantelt das gefaltete Gaskissen 1 und das Füllrohr 2. In der Kissenumhüllung 3 ist eine Sollbruchlinie 10 vorgesehen, die sich im wesentlichen über die gesamte Länge der Gaskissenanordnung erstreckt. Für die beiden Gaskissen 1 kann jeweils eine separate Kissenumhüllung vorgesehen sein. Es ist jedoch auch möglich, eine durchgehende Umhüllung für beide Gaskissen vorzusehen. Die im Material der Kissenumhüllung 3 durchgehende Sollreißlinie 10 kann in Form einer Splittnaht bei der durch Spritzgießen hergestellten Kissenumhüllung vorgesehen sein. Durch die Sollbruchlinie 10 wird ein Berstdruck bestimmt, welcher in der Anfangsphase des Füllvorganges innerhalb der Kissenumhüllung 3 entsteht. Vom Beginn des Auslösens des Füllvorganges, beispielsweise durch Zünden eines Gasgenerators 7 (Fig. 1) bzw. 8 (Fig. 7) bis zum Erreichen des Berstdruckes wird durch den sich im Füllrohr aufbauenden Druck über das gefaltete Gaskissen 1 auf die Kissenumhüllung 3 eine Vorspannung ausgeübt. Das gefaltete Gaskissen 1 und die Kissenumhüllung 3 bilden eine das Füllrohr 2 druckdicht umgebende Ummantelung. Im Füllrohr 2 wird dabei ein Freiraum geschaffen, in welchem sich der zur Erzeugung der Vorspannung erforderliche Druck aufbauen kann. Dieser Druck wirkt über die gesamte Längsausdehnung der Airbagvorrichtung, durch welche sich das Füllrohr 2 in der gesamten Länge der Airbagvorrichtung erstreckt. Bei dem in Fig. 1 dargestellten Ausführungsbeispiel erstreckt sich die Airbagvorrichtung mit den beiden Gaskissenbereichen 1, die von einem durchgehenden Airbag gebildet werden, von der A-Säule 11 bis zur C-Säule 12 des Fahrzeugs. Diese gleichmäßige Vorspannung über die gesamte Länge der Airbagvorrichtung hin gewährleistet bei der Überschreitung des Berstdruckes und der gleichzeitigen Öffnung der Kissenummantelung entlang der gesamten Sollbruchlinie 10 hin ein kurzzeitiges Füllen und Entfalten der Gaskissen 1 bis zur endgültigen Seitenaufprallschutzposition, welche in Fig. 1 schematisch dargestellt ist. Die mit Abnähern 14 versehene Gaskissenanordnung ist mit Spannbändern 15 zwischen der A-Säule und der B-Säule gespannt.

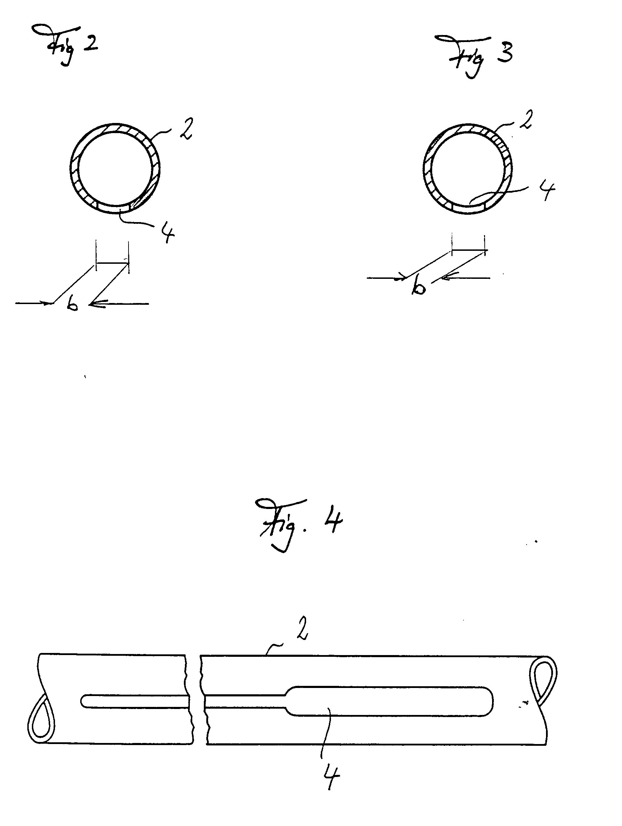

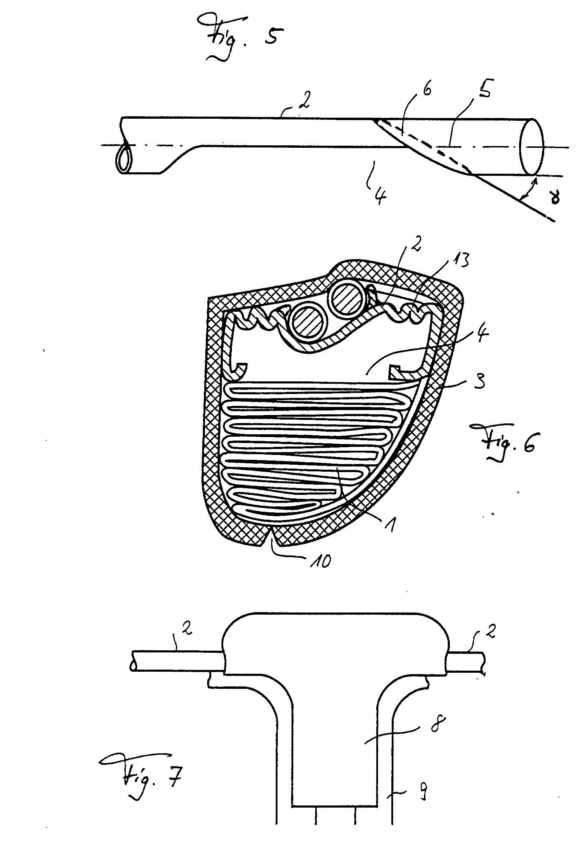

In das Füllrohr ist wenigstens eine Ausblasöffnung 4 eingeformt. Diese Ausblasöffnung 4 ist bevorzugt schlitzförmig ausgebildet. Wie die Fig. 4 zeigt, können unterschiedlich breite Bereiche entlang der Längsausdehnung der Ausblasöffnung 4 vorgesehen sein. Beispielsweise kann die Schlitzbreite b im Bereich des vorderen Gaskissens 3 bis 6 mm (Fig. 2) betragen, und für das Gaskissen im Bereich des Rücksitzes (Fig. 3) kann die Schlitzbreite b 10 bis 14 mm betragen.

Falls nur im Bereich der Vordersitze Gaskissen für den Seitenaufprallschutz vorgesehen sind, kann der breitere Schlitzbereich in der Nähe der B-Säule 9 vorgesehen sein und der engere Schlitzbereich in der Nähe der A-Säule 11.

Wie die Fig. 5 zeigt, kann am Ende des Füllrohres 2, d.h. am geschlossenen Ende, welches entfernt vom Gasgenerator 7 bzw. 8 liegt, eine Prallfläche 6 vorgesehen sein. Diese Prallfläche 6 ist gegenüber der Rohrachse 5 schräg geneigt. Der Neigungswinkel kann etwa 30° betragen. Der Neigungswinkel kann jedoch hiervon auch abweichen in Abhängigkeit von der Lage der Ausblasöffnung 4 gegenüber der Prallfläche 6. Bei dem in der Fig. 5 dargestellten Ausführungsbeispiel erstreckt sich die Ausblasöffnung 4 bis zur schräg geneigten Prallfläche 6, die den Abschluß des Rohrhohlraumes bildet. Durch die Prallfläche 6 wird eine Reflexion der Druckwelle in Richtung zur Ausblasöffnung 4 hin erzeugt. Hierdurch wird das beschleunigte Abströmen des Füllgases aus dem Füllrohr 2 unterstützt. Durch die gegenüber der Rohrachse 5 geneigte Prallfläche 6, welche in Richtung auf die Ausblasöffnung 4 zu mit ihrer Flächennormalen gerichtet ist, wird eine Staudruckregulierung erreicht, welche zu einer beschleunigten radialen Gasabströmung aus dem Füllrohr 2 führt.

Bei den Ausführungsformen der Figuren 2 bis 5 sind kreiszylindrische Profile für das Füllrohr gezeigt. Das Füllrohr kann jedoch auch andere Querschnittsformen haben, beispielsweise eine angenäherte Rechteckform, wie es in Fig. 6 dargestellt ist. Ferner können Verformungsstellen 13 im Füllrohr 2 vorgesehen sein, welche gemäß der Richtlinie FMVSS 201 eine Aufprallabsorption beim Seitenschutz im Kopfbereich des Fahrzeuginsassen gewährleisten.

Bei der in Fig. 7 gezeigten Anordnung eines Gasgenerators 8 im Bereich der B-Säule 9 des Fahrzeugs wird eine gleichzeitige Befüllung des vorderen und hinteren Gaskissens 1 über die Füllrohrstücke 2 gewährleistet. Eine derartige Anordnung des Gasgenerators empfiehlt sich, wenn der Gasgenerator gebildet wird von einem nichttoxischen chemischen Feststoffgenerator.

## Patentansprüche

1. Airbagvorrichtung für ein Kraftfahrzeug mit mindestens einem mit Gas füllbaren Gaskissen, welches entlang einem Seitenfensterrahmenteil am Fahrzeug sowohl in gefaltetem als auch in gefülltem Zustand gehalten ist, einem sich durch das Gaskissen in seiner Längsrichtung erstreckenden, wenigstens eine Ausblasöffnung aufweisenden Füllrohr und einer Kissenumhüllung, welche das gefaltete Gaskissen umgibt und beim Füllen des Gaskissens geöffnet wird,
**dadurch gekennzeichnet, daß**
die wenigstens eine Ausblasöffnung (4) in das Füllrohr (2) als offene Ausblasöffnung (4) eingeformt ist und daß die Ausblasöffnung (4) entlang ihrer Längsausdehnung unterschiedliche Öffnungsbreiten hat.

2. Airbagvorrichtung nach Anspruch 1, **dadurch gekennzeichnet, daß** die jeweilige Ausblasöffnung (4) schlitzförmig ausgebildet ist und sich in Rohrlängsrichtung erstreckt.

3. Airbagvorrichtung nach Anspruch 1 oder 2, **dadurch gekennzeichnet, daß** am geschlossenen Ende des Füllrohres (2) eine gegenüber der Rohrachse (5) geneigte Prallfläche (6) vorgesehen ist.

4. Airbagvorrichtung nach Anspruch 3, **dadurch gekennzeichnet, daß** die Flächennormale der Prallfläche (6) auf die Seite der Ausblasöffnung (4) zu gerichtet ist.

5. Airbagvorrichtung nach einem der Ansprüche 1 bis 7, **dadurch gekennzeichnet, daß** nach Initiierung des Füllvorganges bis zum Erreichen eines Berstdruckes die Kissenumhüllung (3) durch den im Füllrohr (2) aufgebauten Druck vorgespannt ist.

6. Airbagvorrichtung nach einem der Ansprüche 1 bis 5, **dadurch gekennzeichnet, daß** das Füllrohr (2) aus einem deformierbaren Rohrmantel besteht.

7. Airbagvorrichtung nach Anspruch 5, **dadurch gekennzeichnet, daß** die Kissenumhüllung (3) aus gummielastischem Kunststoff besteht.

8. Airbagvorrichtung nach einem der Ansprüche 1 bis 6, **dadurch gekennzeichnet, daß** das Füllrohr (2) als Extruder- oder Strangpressprofil ausgebildet ist.

9. Airbagvorrichtung nach einem der Ansprüche 1 bis 8, **dadurch gekennzeichnet, daß** das Füllrohr (2) eine längs verlaufende Verankerungseinrichtung aufweist, welche im Material der Kissenumhüllung (3) verankert ist.

10. Airbagvorrichtung nach einem der Ansprüche 5 bis 9, **dadurch gekennzeichnet, daß** das Füllrohr (2) und die Kissenumhüllung (3) aus einem Extruderprofil mit zwei Komponenten gebildet sind, wobei die Füllrohrkomponente aus einem härteren Material als die Komponente der Kissenumhüllung besteht.

11. Airbagvorrichtung nach einem der Ansprüche 1 bis 10, **dadurch gekennzeichnet, daß** der Innenquerschnitt des Füllrohres (2) in Abhängigkeit vom Füllvolumen des Gaskissens (1) bemessen ist und bei einem Füllvolumen von etwa 18 Liter eine innere Querschnittsfläche von 70 bis 120 mm² und bei einem Füllvolumen von etwa 30 Liter eine innere Querschnittsfläche von etwa 140 bis 220 mm² aufweist.

12. Airbagvorrichtung nach einem der Ansprüche 1 bis 11, **dadurch gekennzeichnet, daß** ein Gasgenerator (7) zum Füllen des wenigstens einen Gaskissens (1) im Bereich der Instrumententafel des Fahrzeugs angeordnet ist und daß das Füllrohr (2) sich entlang dem oberen Fensterholm oder innerhalb der oberen Dachlinie durch die Gaskissenanordnung nach hinten erstreckt.

13. Airbagvorrichtung nach einem der Ansprüche 1 bis 11, **dadurch gekennzeichnet, daß** ein Gasgenrator (8) im Bereich der B-Säule (9) angeordnet ist und ein vorderes und hinteres Gaskissen (1) über vordere und hintere Füllrohrteile (2) gleichzeitig auffüllbar sind.

## Claims

1. An airbag arrangement for a motor vehicle comprising at least one gas cushion which can be filled with gas and which is held along a side window frame member on the vehicle both in the folded and also in the filled condition, a filling pipe which extends through the gas cushion in its longitudinal direction and has at least one blowing-out opening, and a cushion casing which encloses the folded gas cushion and is opened upon filling of the gas cushion,
**characterised in that**
the at least one blowing-out opening (4) is formed in the filling pipe (2) in the form of an open blowing-out opening (4) and that the blowing-out opening (4) is of differing opening widths along its longitudinal extent.

2. An airbag arrangement according to claim 1 **characterised in that** the respective blowing-out opening (4) is of a slot-shaped configuration and extends in the longitudinal direction of the pipe.

3. An airbag arrangement according to claim 1 or claim 2
**characterised in that** provided at the closed end of the filling pipe (2) is an impingement surface (6) which is inclined with respect to the pipe axis (5).

4. An airbag arrangement according to claim 3 **characterised in that** the normal to the impingement surface (6) is directed towards the side of the blowing-out opening (4).

5. An airbag arrangement according to one of claims 1 to 7
**characterised in that** after initiation of the filling procedure until the attainment of a bursting pressure the cushion casing (3) is prestressed by the pressure which is built up in the filling pipe (2).

6. An airbag arrangement according to one of claims 1 to 5 **characterised in that** the filling pipe (2) comprises a deformable pipe jacket.

7. An airbag arrangement according to claim 5 **characterised in that** the cushion casing (3) comprises rubber-elastic plastic material.

8. An airbag arrangement according to one of claims 1 to 6 **characterised in that** the filling pipe (2) is in the form of an extrusion or continuously pressed member.

9. An airbag arrangement according to one of claims 1 to 8 **characterised in that** the filling pipe (2) has a longitudinally extending anchoring device which is anchored in the material of the cushion casing (3).

10. An airbag arrangement according to one of claims 5 to 9 **characterised in that** the filling pipe (2) and the cushion casing (3) are formed from an extrusion profile with two components, wherein the filling pipe component comprises a harder material than the component of the cushion casing.

11. An airbag arrangement according to one of claims 1 to 10 **characterised in that** the internal cross-section of the filling pipe (2) is dimensioned in dependence on the filling volume of the gas cushion (1) and with a filling volume of about 18 litres has an internal cross-sectional area of 70 to 120 mm² and with a filling volume of about 30 litres has an internal cross-sectional area of about 140 to 220 m².

12. An airbag arrangement according to one of claims 1 to 11 **characterised in that** the gas generator (7) for filling the at least one gas cushion (1) is arranged in the region of the instrument panel of the vehicle and that the filling pipe (2) extends along the upper window frame member or within the upper roof line through the gas cushion arrangement in a rearward direction.

13. An airbag arrangement according to one of claims 1 to 11 **characterised in that** the gas generator (8) is arranged in the region of the B-pillar (9) and a front and a rear gas cushion (1) can be simultaneously filled by way of front and rear filling pipe portions (2).

## Revendications

1. Coussin de sécurité gonflable pour véhicule, comprenant au moins un coussin de gaz qui peut être empli de gaz et qui est retenu le long d'une partie du cadre d'une fenêtre latérale du véhicule tant à l'état plié qu'à l'état empli, un tuyau de remplissage s'étendant dans sa direction longitudinale dans le coussin de gaz et comportant au moins un orifice de sortie et une enveloppe de coussin qui entoure le coussin de gaz plié et qui est ouverte lorsque le coussin de gaz est empli,
**caractérisé en ce que** la au moins une ouverture (4) de sortie est formée dans le tuyau (2) de remplissage sous la forme d'une ouverture (4) de sortie ouverte et **en ce que** l'ouverture (4) de sortie a des largeurs d'ouverture différentes le long de son étendue longitudinale.

2. Coussin de sécurité gonflable selon la revendication 1, **caractérisé en ce que** l'ouverture (4) respective de sortie est en forme de pente et s'étend dans la direction longitudinale du tuyau.

3. Coussin de sécurité gonflable selon les revendications 1 ou 2, **caractérisé en ce qu'**il est prévu à l'extrémité fermée du tuyau (2) de remplissage une surface (6) de rebondissement inclinée par rapport à l'axe (5) du tuyau.

4. Coussin de sécurité gonflable selon la revendication 3, **caractérisé en ce que** la normale à la surface (6) de remplissage est dirigée du côté de l'ouverture (4) de sortie.

5. Coussin de sécurité gonflable selon l'une des revendications 1 à 7, **caractérisé en ce qu'**après que l'opération de remplissage a débuté et jusqu'à ce que soit atteinte une pression d'éclatement, l'enveloppe (3) du coussin est mise sous précontrainte par la pression créée dans le tuyau (2) de remplissage.

6. Coussin de sécurité gonflable selon l'une des revendications 1 à 5, **caractérisé en ce que** le tuyau (2) de remplissage est en une gaine de tuyau déformable.

7. Coussin de sécurité gonflable selon la revendication 5, **caractérisé en ce que** l'enveloppe (3) du coussin est en une matière plastique ayant l'élasticité du caoutchouc.

8. Coussin de sécurité gonflable selon l'une des revendications 1 à 6, **caractérisé en ce que** le tuyau (2) de remplissage est constitué sous la forme d'un profilé d'extrudeuse ou d'un profilé extrudé.

9. Coussin de sécurité gonflable selon l'une des revendications 1 à 8, **caractérisé en ce que** le tuyau (2) de remplissage comporte un dispositif d'arrimage qui s'étend longitudinalement et qui est arrimé dans le matériau de l'enveloppe (3) du coussin.

10. Coussin de sécurité gonflable selon l'une des revendications 5 à 9, **caractérisé en ce que** le tuyau (2) de remplissage et l'enveloppe (3) du coussin sont en un profilé d'extrusion à deux composants, le composant du tuyau de remplissage étant en un matériau plus dur que le composant de l'enveloppe du coussin.

11. Coussin de sécurité gonflable selon l'une des revendications 1 à 10, **caractérisé en ce que** la section transversale intérieure du tuyau (2) de remplissage est déterminée en fonction du volume du coussin (1) à remplir de gaz et pour un volume à remplir de 18 litres environ a une surface intérieure de section transversale de 70 à 120 mm² et pour un volume à remplir de 30 litres environ une surface intérieure de section transversale d'environ 140 à 220 mm².

12. Coussin de sécurité gonflable selon l'une des revendications 1 à 11, **caractérisé en ce qu'**un générateur (7) de gaz destiné à remplir au moins un coussin (1) de gaz est monté dans la région du tableau d'instruments du véhicule et **en ce que** le tuyau (2) de remplissage s'étend vers l'arrière dans le dispositif à coussin de gaz le long du montant de fenêtre supérieur ou dans la ligne de toit supérieure.

13. Coussin de sécurité gonflable selon l'une des revendications 1 à 11, **caractérisé en ce qu'**un générateur (8) de gaz est monté dans la région de la colonne B (9) et un coussin (1) de gaz avant et arrière peuvent être remplis simultanément par des parties (2) du tuyau de remplissage avant et arrière.
